# FASCICULE DE BREVET EUROPEEN

(11) **EP 1 869 427 B1**
(45) Date de publication et mention de la délivrance du brevet: **05.03.2014**
(21) Numéro de dépôt: 06726240.2
(22) Date de dépôt: 13.03.2006
(51) Int. Cl.: G01N 15/00, B01F 5/06

(54) **DISPOSITIF DE SEPARATION FLUIDIQUE**
FLÜSSIGKEITSTRENNVORRICHTUNG
FLUID SEPARATION DEVICE

(30) Priorité: 11.03.2005 FR 0550645
(43) Date de publication de la demande: 26.12.2007
(73) Titulaire: Centre National de la Recherche Scientifique, 75794 Paris Cedex 16 (FR)
(72) Inventeur: HOYOS, Mauricio, F-94000 Creteil (FR); KUROWSKI, Pascal, F-75020 Paris (FR); CALLENS, Natacha, B-1650 Beersel (BE)
(74) Mandataire: Ramey, Daniel
(86) Numéro de dépôt international: PCT/FR2006/050216
(87) Numéro de publication internationale: WO 2006/095117

(56) Documents cités:
- US-A1- 2003 198 130
- US-B1- 6 432 630

## Description

L'invention concerne un dispositif de séparation fluidique, notamment un dispositif microfluidique, et ses applications.

De manière conventionnelle, le tri cellulaire est réalisé au moyen de membranes ou de filtres ou par des méthodes d'élutriation, de centrifugation avec Ficol^{®}, Percoll^{®} ou autres phases stationnaires. Néanmoins, pour certaines applications comme par exemple la séparation de cellules infectées par des parasites, les dispositifs de séparation existants peuvent s'avérer insuffisamment efficaces.

Sont également connues des méthodes de séparation utilisant des champs magnétiques ou électriques, comme décrit dans les ouvrages Cell separation methods and applications, D. Recktenwald, A. Radbruch, Eds. Marcel Dekker 1997, et Cell separation, a practical approach, D. Fisher, G.E. Francis, Eds. Oxford, PAS 193, 1998. Ces méthodes peuvent utiliser des phases stationnaires ou non.

Les méthodes utilisant un champ magnétique nécessitent un traitement préalable des échantillons car les cellules n'ont pas une magnétisation naturelle suffisante pour pouvoir être séparées.

La cytométrie de flux est largement utilisée en matière de tri et de caractérisation des cellules sanguines. Cette méthode permet de trier plusieurs espèces simultanément avec une sélectivité élevée. Toutefois, la cytométrie de flux n'est pas adaptée à effectuer des séparations préparatives ou semi-préparatives car la séparation est alors réalisée cellule par cellule, avec environ 15 000 cellules par seconde, cette méthode ne pouvant pas encore être considérée comme une méthode préparative.

Des dispositifs microfluidiques pour réaliser des séparations sont encore décrits dans les articles suivants :
- Integrating advanced functionality in a microfabricated high-throughput fluorescent-activated cell sorter, A. Wolff, I. Peter-Nielsen, U. Larsen, P. Friis, G. Goranovic, C. Poulsen, J. Kutter, P. Telleman, Lab-on-a-ship, 3, 2003, 22-27,
- Lab-on-a-chip-based separation and detection technology for life science applications, B. H. Weigl and K. Hedine, American Biotechnology Laboratory, January 2002, 28-30,
- A microfabricated fluorescence-activated cell sorter, A. Y. Fu, Ch. Spenser, A. Scherer, F. Arnold and S. Quake, Nature Biotechnology, vol. 17, November 1999, 1109-1111.
- A microfabrication-based dynamic array cytometer, J. Voldman, M.L. Gray, M. Toner and M. A. Schmidt, Analytical Chemistry, 74, 2002, 3984-3990,
- Microfluidic device for single-cell analysis, A. R Wheeler, W.R Throndset, RJ. Whelan, A.M. Leach, R N. Zare, Y.H. Liao, K. Farrell, I.D. Manger and A. Daridon, Analytical Chemistry, 75, 2003, 3581-3586,
- Microfluidic device for high throughput chemical analysis of cells, M.A. McClain, C.T. Culbertson, S.C. Jacobson, N. L. Allbritton, C.E. Sims and M. Ramsey, Analytical Chemistry, 75, 2003, 5646-5655,
- Passively driven integrated microfluidic system for separation of motile sperm, B.S. Cho, T.G. Schuster, X. Zhu, D. Chang, G.D. Smith and S. Takayama, Analytical Chemistry, 75, 2003, 1671-1675,
- Microfluidic optical sorting, M. MacDonald, G. Spalding and K. Dholakaia, Nature 426, 2003, 421-424,
- Microfluidic diffusion-based separation and detection, B.H. Weigl and P. Yager, Science, vol. 283 1999, 346-347.

Ces dispositifs sont peu coûteux et utilisent relativement peu de réactifs et de matière à analyser.

Un autre avantage est la possibilité de réunir un nombre important d'unités dans une petite surface ou volume, ce qui permet de traiter une quantité importante de matière même si chaque unité en utilise peu. De plus, les dispositifs microfluidiques sont particulièrement intéressants pour des applications biologiques car ils peuvent être jetables, à usage unique, ce qui, en médecine, permet d'éviter les problèmes de contamination.

On connaît par la demande de brevet US 2003/0234210 un dispositif de séparation pour séparer des particules en suspension, comportant une pluralité de canaux de sortie. Ce dispositif est en outre pourvu de valves capables de générer des pulsations de pression pour contrôler l'écoulement dans les canaux.

On connaît par la demande de brevet US 2003/0165812 un dispositif de tri, par exemple de spermatozoïdes, ce dispositif comportant deux canaux d'entrée et deux canaux de sortie faisant un angle d'environ 45° entre eux.

La demande de brevet US 2003/0124619 décrit un dispositif de séparation ayant une configuration de filtre en H, ce dispositif étant utilisé pour la séparation de macromolécules de différents coefficients de diffusion.

La demande de brevet US 2002/0149766 décrit un micro-cytomètre.

On connaît encore par la demande de brevet US 2001/0048637 un dispositif microfluidique comportant deux canaux d'entrée se raccordant perpendiculairement à un canal central.

On connaît également des dispositifs de séparation du type SPLITT (en anglais, *split-flow lateral-transport thin separation cell*), comportant des diviseurs de débit formés chacun par exemple par une lame rigide ou semi-rigide, comme décrit dans l'article Viral separations using a microfabricated electrical SPLITT system, A. D. Saldanha, G. GaleIn Proc. Of Micro-TAS 2002, Nara, Japan, 2002. Ces diviseurs de débit permettent de prévenir l'apparition de points de stagnation ou zones de recirculation de l'écoulement avec piégeage des espèces aux entrées et aux sorties.

Dans un certain nombre de dispositifs, la séparation est réalisée sur la largeur du microcanal, ce qui tend à limiter le nombre de particules pouvant être séparées simultanément.

Concernant les dispositifs de séparation SPLITT pouvant séparer des espèces suivant l'épaisseur d'un microcanal, ceux-ci peuvent utiliser ou non des diviseurs de débit. Ces diviseurs de débit, lorsqu'ils sont de taille réduite, sont difficiles à mettre en oeuvre.

Lorsque les diviseurs de débit présentent une épaisseur excessive, ceux-ci peuvent perturber l'écoulement en aval (création d'une zone de recirculation avec piégeage des particules par exemple). Les diviseurs de débit doivent ainsi être réalisés avec une épaisseur faible et, dans ce cas, présentent une rigidité réduite et peuvent se déformer du fait de la différence de pression de part et d'autre de ces diviseurs de débit.

Dans le cas de dispositifs de séparation avec diviseurs de débit, il est difficile d'avoir plus de deux entrées ou sorties.

Dans la suite, on désigne par « dispositif microfluidique » un dispositif mettant en jeu le transport d'un produit au sein d'au moins un microcanal. Par « microcanal », on désigne un canal qui comporte sur au moins une portion de sa longueur une section dont au moins une dimension mesurée en ligne droite d'un bord à un bord opposé est inférieure au millimètre.

Un microcanal peut par exemple présenter une largeur de 4 cm, une longueur de 20 cm et une épaisseur de 100 µm.

Le document US 2003/0198130 A1, décrit un dispositif microfluidique permettant de mélanger au moins deux fluides, le dispositif comprenant au moins deux microcanaux de fluide définis dans des feuilles superposées les unes sur les autres.

La présente invention vise notamment à améliorer les dispositifs de tri et/ou de séparation d'espèces.

L'invention a pour objet, selon l'un de ses aspects, un dispositif de séparation fluidique, notamment un dispositif microfluidique, comportant :
- au moins un microcanal s'étendant suivant un axe longitudinal, le microcanal ayant une section transversale présentant une largeur mesurée suivant un premier axe transversal et une épaisseur mesurée suivant un deuxième axe transversal perpendiculaire au premier, la largeur étant supérieure à l'épaisseur, le microcanal comportant, suivant le deuxième axe transversal, des parois inférieure et supérieure,
- au moins des première, deuxième et troisième entrées en communication fluidique avec le microcanal, la deuxième entrée étant disposée, suivant le deuxième axe transversal, entre les première et troisième entrées.

Dans un exemple de mise en oeuvre de l'invention, le dispositif comporte en outre au moins des première et deuxième parois de séparation transversales séparant les première et deuxième entrées, respectivement les deuxième et troisième entrées, les première et deuxième parois de séparation étant agencées de manière à ce que la deuxième entrée soit séparée de chacune des parois inférieure et supérieure du microcanal par une distance non nulle mesurée suivant le deuxième axe transversal, la deuxième entrée étant par exemple adjacente à l'une au moins des parois de séparation.

Le dispositif selon l'invention permet de faire circuler, avec focalisation hydrodynamique, un produit contenant des espèces dans le microcanal, *via* la deuxième entrée, de manière à former une nappe de produit éloignée des parois inférieure et supérieure du microcanal, ce qui permet de réduire les effets dus à l'interaction entre le produit et ces parois, notamment les effets dus aux forces de portance hydrodynamique, à la lubrification, aux interactions électrostatiques, aux forces de Van Der Waals, et aux effets de diffusion hydrodynamique induite par cisaillement.

La nappe de produit ainsi formée peut être stable avec des lignes de courant sensiblement parallèles à l'axe longitudinal du microcanal.

Grâce à l'invention, il est possible d'avoir une nappe d'épaisseur relativement faible en réalisant les parois de séparation avec une hauteur appropriée.

Le dispositif permet de réaliser des tris et/ou séparations sur l'épaisseur du microcanal.

En munissant le dispositif selon l'invention d'un nombre prédéterminé d'entrées et de parois de séparation, par exemple de plus de trois entrées, il est possible de réaliser au sein du dispositif des opérations telles que des mélanges d'espèces.

Le dispositif selon l'invention peut être dépourvu de diviseur de débit.

Le microcanal peut présenter, par exemple, un rapport largeur/épaisseur supérieur ou égal à 2, par exemple supérieur ou égal à 5 ou 10.

L'invention peut permettre d'avoir un écoulement dans le microcanal avec un profil de vitesse pouvant être considéré comme bidimensionnel, par exemple sur au moins 90 % de la largeur du microcanal lorsque le rapport largeur/épaisseur est supérieur ou égal à 10.

Par ailleurs, du fait que la largeur du microcanal peut être relativement importante par rapport à son épaisseur, la quantité de produit circulant dans le microcanal peut être relativement élevée même si l'épaisseur du microcanal est relativement faible.

Le microcanal peut présenter une section transversale constante ou non.

L'épaisseur du microcanal peut être constante ou variable, avec par exemple au moins deux zones se succédant axialement et présentant des épaisseurs différentes.

La section transversale peut être par exemple rectangulaire ou présenter une forme de cuvette.

L'épaisseur du microcanal peut être comprise entre environ 20 et 1000 µm, par exemple entre 20 et 500 µm ou 20 et 50 µm, la largeur comprise entre environ 0,5 mm et 10 cm, par exemple entre 0,5 et 5 mm et la longueur, mesurée suivant l'axe longitudinal, entre environ 1 et 10 cm ou supérieure à 10 cm.

Les parois de séparation peuvent présenter des hauteurs identiques ou non, mesurées suivant le deuxième axe transversal.

De préférence, l'une au moins desdites trois entrées présente une largeur au moins égale à celle du microcanal et/ou présente une section sensiblement rectangulaire.

Dans un exemple de mise en oeuvre de l'invention, l'une au moins des trois entrées débouche sur l'une des parois inférieure et supérieure du microcanal et une autre des trois entrées sur l'autre des parois inférieure et supérieure du microcanal.

Les première et troisième entrées sont par exemple disposées en regard l'une de l'autre.

En variante, les trois entrées débouchent toutes soit sur la paroi inférieure soit sur la paroi supérieure du microcanal.

Dans un exemple de mise en oeuvre de l'invention, les première et troisième entrées sont décalées l'une par rapport à l'autre suivant l'axe longitudinal du microcanal.

La deuxième entrée peut déboucher dans le microcanal sensiblement parallèlement ou perpendiculairement à l'axe longitudinal de celui-ci.

La deuxième entrée peut être avantageusement adjacente à, ou en amont de l'une au moins des parois de séparation.

Dans un exemple de mise en oeuvre de l'invention, le dispositif comporte au moins un orifice d'alimentation associé à l'une desdites trois entrées, l'orifice d'alimentation étant en communication fluidique avec cette entrée *via* un conduit ayant au moins une portion dont la section s'élargit latéralement, le conduit comportant par exemple une portion divergeant depuis un sommet, étant par exemple de forme triangulaire lorsqu'observé de dessus, l'orifice d'alimentation débouchant dans le conduit par exemple de manière adjacente audit sommet, notamment perpendiculairement au conduit.

Cette portion divergente du conduit permet de former à partir d'un point d'alimentation une nappe de produit.

Dans un exemple de mise en oeuvre de l'invention, le dispositif comporte au moins des première et deuxième sorties en communication fluidique avec le microcanal et séparées l'une de l'autre par une paroi de séparation transversale ayant une hauteur non nulle mesurée suivant le deuxième axe transversal.

Les première et deuxième sorties permettent de récupérer les espèces ayant migré au sein du microcanal en fonction par exemple de leur taille, leur coefficient de diffusion ou l'intensité de l'interaction des espèces avec un champ de force appliqué au microcanal.

L'invention permet notamment une séparation en continu sans utilisation de membranes de filtration ou de dialyse.

Les première et deuxième sorties peuvent être décalées l'une par rapport à l'autre suivant l'axe longitudinal du microcanal. En variante, les première et deuxième sorties peuvent être disposées en regard l'une de l'autre.

Dans un exemple de mise en oeuvre de l'invention, le dispositif comporte en outre une troisième sortie, la deuxième sortie étant disposée entre les première et troisième sorties suivant le deuxième axe transversal, les première et deuxième sorties, d'une part, et les deuxième et troisième sorties, d'autre part, étant respectivement séparées par des parois de séparation transversales ayant une hauteur non nulle mesurée suivant le deuxième axe transversal.

La récupération des espèces aux sorties peut être réalisée sans perturbation sensible.

Dans un exemple de mise en oeuvre de l'invention, le dispositif comporte au moins un orifice de sortie associé à l'une desdites sorties du microcanal, cet orifice étant en communication fluidique avec cette sortie *via* un conduit, le conduit comportant au moins une portion dont la section se rétrécit latéralement, notamment une portion convergeant vers un sommet, cette portion étant par exemple de forme triangulaire lorsqu'observée de dessus, l'orifice de sortie débouchant dans le conduit par exemple de manière adjacente au sommet, notamment perpendiculairement au conduit.

Cette portion convergente du conduit permet d'éviter la formation de point de stagnation au niveau de l'orifice de sortie.

Dans un exemple de mise en oeuvre de l'invention, le dispositif est agencé pour générer au sein d'au moins une portion du microcanal au moins un champ de force transversal, notamment un champ gravitationnel, électrique, magnétique ou acoustique, afin par exemple de faire migrer les espèces dans la direction du deuxième axe transversal.

Grâce à l'invention, l'application du champ de force transversal peut être mis en oeuvre de manière relativement aisée car le champ de force peut être appliqué sur la largeur du microcanal, laquelle peut être relativement importante, et non sur son épaisseur.

Dans un exemple de mise en oeuvre de l'invention, le dispositif comporte au moins une feuille, notamment un empilement d'au moins deux feuilles, par exemple en matière plastique ou en métal, formant au moins partiellement le microcanal.

La feuille ou ledit empilement de feuilles peut être pris en sandwich entre au moins deux plaques, notamment en matière plastique, par exemple en Plexiglas^{®}

De manière générale, le microcanal peut être fabriqué dans différents types de matériaux, notamment en plastique, par exemple en polydiméthylsiloxane (PDMS), ou en verre.

Le microcanal peut être fabriqué à l'aide de méthodes de fabrication connues utilisées dans le domaine de la microfluidique.

Le dispositif peut comporter, le cas échéant, un réseau de microcanaux disposés notamment en parallèle et permettant, si on le souhaite, de traiter un volume important de produit, la récupération des espèces pouvant se faire séparément pour chaque microcanal ou, en variante, à l'aide d'une ou plusieurs sorties communes à plusieurs microcanaux.

Le microcanal peut être pourvu, le cas échéant, d'au moins une vanne, par exemple une électrovanne.

L'invention a encore pour objet, selon un autre de ses aspects, l'utilisation du dispositif tel que précité, dans l'une des applications suivantes : méthodes de tri d'espèces, notamment macromoléculaires, par exemple de particules rigides ou déformables, de cellules biologiques, notamment de cellules sanguines, par exemple des cellules cancéreuses dans un échantillon de sang, et des bactéries, d'émulsions colloïdales ou non colloïdales, de protéines, de liposomes, d'émulsions, méthodes de diagnostic ou d'analyse, méthodes de purification, d'enrichissement ou d'appauvrissement d'espèces, méthodes de synthèse d'espèces, méthodes de modification des caractéristiques physiques ou chimiques d'espèces, méthodes de recherche de médicaments, méthodes de mélange, méthodes de mesure du coefficient de diffusion.

Le dispositif peut par exemple être utilisé pour enrichir un échantillon de fluide en plaquettes ou en cellules spécifiques, par exemple en cellules cancéreuses, en lymphocytes ou en cellules souches. L'échantillon ainsi enrichi peut ensuite être analysé ou traité, par exemple, en vue d'un diagnostic et/ou de la formation de nouvelles espèces et/ou d'un isolement.

L'invention permet, en réduisant les effets dus à l'interaction avec les parois du microcanal, d'éviter d'abîmer certains types de structures biologiques, notamment les plaquettes qui sont particulièrement sensibles au cisaillement.

Le dispositif peut également être utilisé pour enrichir des espèces en macrophages infectés par des parasites en vue d'études électro-physiologiques.

Le dispositif selon l'invention permet de réaliser des séparations préparatives lorsque le dispositif fonctionne en continu et permet de traiter des dizaines de millions de particules ou de cellules par seconde, le cas échéant.

L'invention a encore pour objet, selon un autre de ses aspects, un procédé, notamment de tri et/ou de séparation d'espèces contenues dans un produit, caractérisé par le fait qu'il comporte les étapes suivantes :
- faire circuler, de préférence de manière continue, au soin d'un dispositif tel que précité, dans le microcanal *via* ladite deuxième entrée, un produit contenant des espèces,
- faire circuler, de préférence de manière continue, un ou plusieurs fluides porteurs dans le microcanal *via* lesdites première et deuxième entrées de manière à ce que le produit contenant les espèces s'écoule, au moins sur une portion du microcanal, sous la forme d'une nappe éloignée des parois inférieure et supérieure du microcanal.

Le procédé peut comporter l'étape suivante :
- disposer le microcanal dans au moins un champ de force transversal au moins lorsqu'un écoulement est établi dans le microcanal, le champ de force étant notamment l'un d'un champ gravitationnel, électrique, magnétique ou acoustique, le champ étant permanent ou non, variable ou constant, selon les opérations à effectuer.

Le procédé peut comporter l'étape suivante :
- faire migrer les espèces sous l'effet de forces de portance hydrodynamique ou sous l'effet de la diffusion hydrodynamique induite par cisaillement.

Le procédé peut en outre comporter l'étape suivante :
- récupérer à l'une au moins desdites sorties du microcanal les espèces ayant migré.

Les espèces sont par exemple des plaquettes sanguines ou d'autres cellules humaines, animales ou végétales.

L'invention a encore pour objet, selon un autre de ses aspects, un dispositif de séparation fluidique selon la revendication 24.

L'une au moins des deux plaques peut être sensiblement rigide et la feuille sensiblement souple ou flexible.

L'épaisseur d'une plaque est par exemple supérieure à celle d'une feuille.

Le dispositif peut être au moins partiellement déformable de manière à permettre de réaliser, par déformation, le microcanal avec une forme non rectiligne.

Le microcanal peut par exemple être formé avec des feuilles et/ou des plaques réalisées en matériaux déformables.

Le dispositif peut avoir une forme extérieure sensiblement cylindrique.

Le microcanal peut, en variante, être réalisé par usinage, notamment dans une plaque.

L'invention a encore pour objet selon un autre de ses aspects, un procédé de fabrication selon la revendication 25.

La présente invention sera mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en coupe transversale, un dispositif conforme à l'invention,
- les figures 2 et 3 représentent, schématiquement et partiellement, en perspective, deux étapes de fabrication du dispositif de la figure 1,
- les figures 4 à 7 sont des vues schématiques et partielles de dispositifs conformes à d'autres exemples de mise en oeuvre de l'invention,
- les figures 8 et 9 illustrent, schématiquement et partiellement, des dispositifs conformes à l'invention, comportant chacun un réseau de microcanaux,
- la figure 10 représente, schématiquement et partiellement, en perspective, différents éléments d'un dispositif conforme à un autre exemple de mise en oeuvre de l'invention, et
- la figure 11 est une vue en coupe, schématique et partielle, du dispositif de la figure 10.

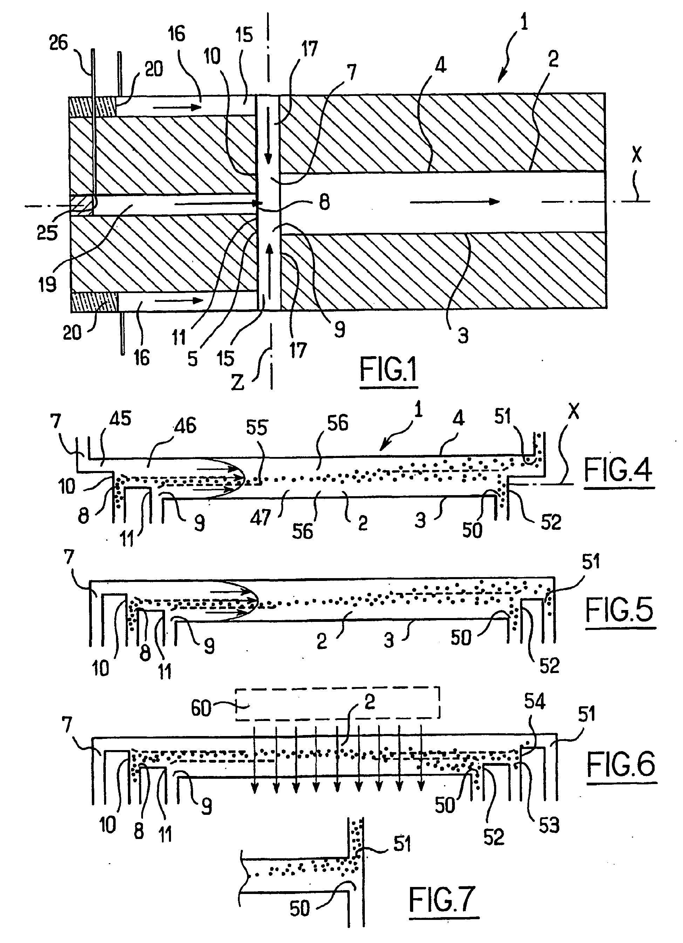

On a représenté sur la figure 1 un dispositif 1 conforme à l'invention, comportant un microcanal 2 s'étendant suivant un axe longitudinal X.

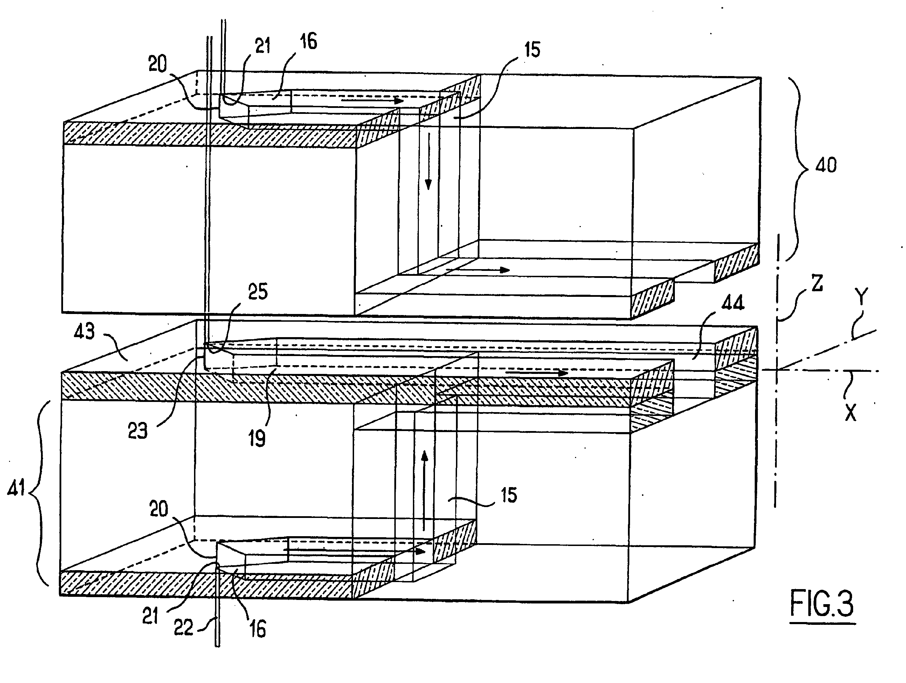

Le microcanal 2 présente une section transversale rectangulaire ayant une largeur mesurée suivant un premier axe transversal Y et une épaisseur mesurée suivant un deuxième axe transversal Z, comme illustré sur la figure 3.

Dans l'exemple considéré, le rapport largeur/épaisseur du microcanal est supérieur à 10.

La largeur du microcanal peut être d'environ 0,5 cm, l'épaisseur d'environ 440 µm et la longueur d'environ 12 cm.

Le microcanal 2 comporte des parois inférieure 3 et supérieure 4 perpendiculaires à l'axe Z.

Le microcanal 2 comporte à une extrémité axiale 5 des première, deuxième et troisième entrées 7, 8 et 9.

Les première 7 et troisième 9 entrées débouchent respectivement sur les parois supérieure 4 et inférieure 3 du microcanal 2, perpendiculairement à l'axe X, en regard l'une de l'autre.

La deuxième entrée 8 débouche dans le microcanal 2 parallèlement à l'axe X.

Les entrées 7 à 9 présentent une section sensiblement rectangulaire, avec une largeur égale à celle du microcanal 2.

La première entrée 7 et la deuxième entrée 8, respectivement la deuxième entrée 8 et la troisième entrée 9, sont séparées par une première paroi de séparation transversale 10, respectivement une deuxième paroi de séparation transversale 11, ces parois de séparation 10 et 11 étant perpendiculaires à l'axe longitudinal X.

Comme on peut le voir sur la figure 1, les parois de séparation 10 et 11 sont toutes les deux adjacentes à la deuxième entrée 8 et respectivement aux première 7 et troisième 9 entrées.

Les première 7 et troisième 9 entrées sont alimentées chacune par un conduit 15 comportant une première portion 16 parallèle à l'axe X et une seconde portion 17 parallèle à l'axe Z.

La deuxième entrée 8 est alimentée par un conduit 19 parallèle à l'axe X.

La première portion 16 des conduits 15 présente une forme divergeant depuis un sommet 20, notamment une forme triangulaire lorsqu'observée de dessus selon l'axe Z, un orifice d'alimentation 21 adjacent au sommet 20 débouchant dans la portion 16, perpendiculairement à celle-ci, comme on peut le voir sur la figure 3.

Chaque orifice d'alimentation 21 peut être relié à une réserve de produit non représentée, *via* par exemple un conduit 22.

Le conduit 19 présente une forme divergeant depuis un sommet 23, notamment une forme triangulaire, comme illustré sur la figure 3.

Un orifice d'alimentation 25 adjacent au sommet 23 débouche dans le conduit 19, perpendiculairement à celui-ci.

L'orifice d'alimentation 25 peut être relié à une réserve de produit, non représentée, *via* un conduit 26.

Les conduits 22 et 26 peuvent présenter une section transversale circulaire par exemple.

La forme des portions 16 et du conduit 19 permet à partir d'un point d'injection de former un écoulement sous la forme d'une nappe présentant une largeur égale à celle du microcanal 2.

La deuxième entrée 8 présente une épaisseur plus faible que celle du microcanal 2, par exemple au moins deux fois plus faible.

Comme on peut le constater, en augmentant la hauteur des parois de séparation 10 et 11 suivant l'axe transversal Z, il est possible de diminuer l'épaisseur de la deuxième entrée 8 de manière à réduire l'épaisseur de la nappe de produit issue de cette entrée 8.

L'épaisseur de la nappe peut également être contrôlée, si on le souhaite, en manipulant les débits des écoulements provenant des entrées 7 et 9.

Il est également possible, notamment en sélectionnant la hauteur des parois de séparation 10 et 11, de positionner la nappe issue de l'entrée 8 à une hauteur choisie dans le sens de l'épaisseur du microcanal.

Le dispositif 1 peut être du type à usage unique et être dépourvu, le cas échéant, de systèmes actifs.

On va maintenant décrire des étapes de fabrication du dispositif microfluidique 1.

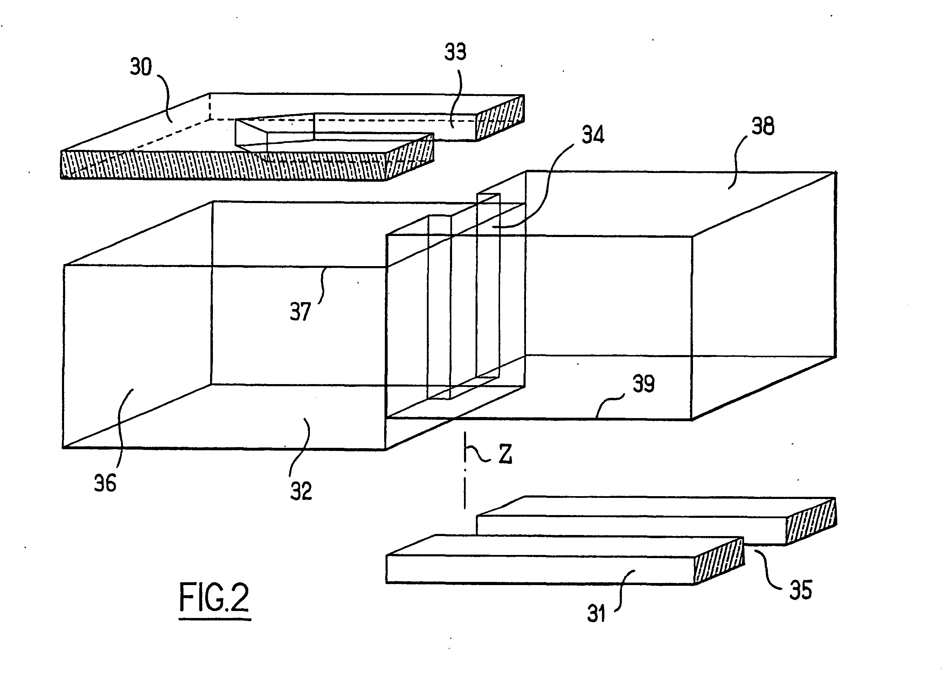

Comme illustré sur la figure 2, des feuilles 30 et 31 sont assemblées avec une plaque 32.

La feuille 30 comporte une découpe 33 destinée à former la portion 16 du conduit 15.

La plaque 32 comporte un passage 34 d'axe Z destiné à former la portion 17 du conduit 15.

La feuille 31 comporte une découpe 35 destinée à former une portion du microcanal 2.

Dans l'exemple considéré, les feuilles 30 et 31 sont en matière plastique, par exemple en Mylar^{®}.

En variante, l'une des feuilles 30 et 31 peut être en polyimide.

En variante, les feuilles 30 et 31 peuvent par exemple être métalliques.

La plaque 32 peut être réalisée en matière plastique, par exemple en Plexiglas^{®}, ou en polycarbonate, d'un seul tenant ou comporter des portions assemblées.

La plaque 32 comporte une première portion 36 avec une face supérieure 37 destinée à recevoir la feuille 30.

La plaque 32 comporte une deuxième portion 38 présentant la même hauteur mesurée suivant l'axe Z que la première portion 36 et étant décalée par rapport à celle-ci d'une distance égale à l'épaisseur de chacune des feuilles 30 et 31.

La feuille 30 est fixée sur la face supérieure 37 de la première portion 36 et la feuille 31 sur la face inférieure 39 de la deuxième portion 38 de manière à former un premier ensemble 40, comme illustré sur la figure 3.

La fixation des feuilles 30 et 31 sur la plaque 32 peut être réalisée par exemple à l'aide d'une colle.

Un second ensemble 41 symétrique de l'ensemble 40 par rapport au plan défini par les axes X et Y est fabriqué.

Une feuille 43 est interposée entre les ensembles 40 et 41, cette feuille 43 présentant une découpe 44 destinée à former, d'une part, le conduit 19 et, d'autre part, avec les découpes 35 des ensembles 40 et 41, le microcanal 2.

Des sorties du microcanal 2 peuvent être réalisées de manière analogue.

Dans l'exemple qui vient d'être décrit, les première 7 et troisième 9 entrées débouchent en regard l'une de l'autre.

En variante, comme illustré sur la figure 4, les première 7 et troisième 9 entrées peuvent être décalées suivant l'axe X.

Les parois de séparation 10 et 11 sont, dans l'exemple considéré, également décalées suivant l'axe X.

La première entrée 7 débouche dans une première zone 45 présentant une épaisseur suivant l'axe Z, cette première zone se raccordant à une deuxième zone 46 d'épaisseur plus importante et dans laquelle débouche la deuxième entrée 8.

La deuxième zone 46 se raccorde à une zone centrale 47 du microcanal 2.

La différence d'épaisseur entre les zones 45 et 46, respectivement entre les zones 46 et 47, correspond à la hauteur de la paroi de séparation 10, respectivement à la hauteur de la paroi de séparation 11.

Cette disposition décalée suivant l'axe X des entrées 7 à 9 permet de munir le microcanal 2 d'un nombre d'entrées supérieur à trois, par exemple quatre ou cinq.

Le microcanal 2 comporte deux sorties 50 et 51 décalées suivant l'axe X et séparées entre elles par une paroi de séparation transversale 52 perpendiculaire à l'axe X.

Dans l'exemple illustré à la figure 4, l'entrée 7 débouche sur la paroi supérieure 4 du microcanal et les entrées 8 et 9 sur la paroi inférieure 3 du microcanal.

En variante, comme illustré sur la figure 5, les entrées 7 à 9 débouchent toutes sur la paroi inférieure 3 du microcanal.

Les sorties 50 et 51 peuvent déboucher l'une sur la paroi inférieure 3 du microcanal et l'autre sur la paroi supérieure 4, comme illustré sur la figure 4, ou, en variante, déboucher toutes les deux sur l'une ou l'autre des parois inférieure 3 ou supérieure 4, comme illustré sur la figure 5.

Le microcanal 2 peut comporter un nombre de sorties supérieur à 2.

Par exemple, comme illustré sur la figure 6, le microcanal 2 comporte trois sorties 50, 51 et 53, décalées suivant l'axe X et séparées deux à deux par des parois de séparation transversales 52 et 54.

Les sorties 50 et 51 peuvent, le cas échéant, déboucher l'une en regard de l'autre, comme illustré sur la figure 7.

Le dispositif 1 peut s'utiliser de la manière suivante.

Comme illustré sur la figure 4 par exemple, on fait circuler par les première 7 et troisième 9 entrées un fluide porteur 56 et par la deuxième entrée 8 un produit 55 contenant des espèces à trier et/ou séparer.

Lorsque l'écoulement au sein du microcanal 2 est stationnaire, la nappe de produit 55 entre les fluides porteurs 56 est maintenue éloignée des parois inférieure 3 et supérieure 4 du microcanal 2 au moins sur une certaine longueur de celui-ci de manière à réduire les interactions du produit 55 avec ces parois 3 et 4.

Il est possible de générer au sein d'une portion au moins du microcanal 2 un champ de force transversal, par exemple à l'aide d'un dispositif 60, comme illustré sur la figure 6.

Ce champ de force transversal peut être un champ électrique, magnétique ou acoustique.

Les espèces contenues dans la nappe de produit 55 peuvent migrer transversalement sous l'effet d'un champ de force transversal, par exemple gravitationnel, ou sous l'action d'effets hydrodynamiques, tels que par exemple les forces de portance ou la diffusion induite par cisaillement.

L'effet dû aux forces de portance hydrodynamique dépend de la taille des espèces.

La diffusion hydrodynamique induite par cisaillement dépend du cisaillement local, de la taille et de la concentration des espèces.

Le champ de force transversal peut être appliqué sur toute la longueur du microcanal 2 ou sur une portion seulement de celui-ci.

Les espèces ayant migré sont récupérées par l'une ou l'autre des sorties 50 et 51.

La séparation des espèces aux sorties 50 et 51 est réalisée en fonction de la taille ou du coefficient de diffusion des particules ou de l'intensité du champ de force transversal éventuellement appliqué.

Le dispositif 1 peut être utilisé comme séparateur analytique dans le domaine des méthodes de diagnostic, par exemple pour déterminer différents types de cellules dans un échantillon hétérogène.

Le dispositif 1 peut comporter, le cas échéant, une ou plusieurs vannes permettant de contrôler l'injection de produit par les entrées 7 à 9, cette vanne pouvant être par exemple une électrovanne à voie unique ou à voies multiples.

L'injection de produit par les entrées 7 à 9 peut être contrôlée en fréquence et en débit de manière à permettre le fonctionnement du dispositif 1 en continu afin de traiter des volumes de produit importants.

Le dispositif 1 selon l'invention permet de séparer des particules, des macromolécules, des colloïdes, des cellules biologiques, par exemple des cellules sanguines, des cellules cancéreuses ou des bactéries.

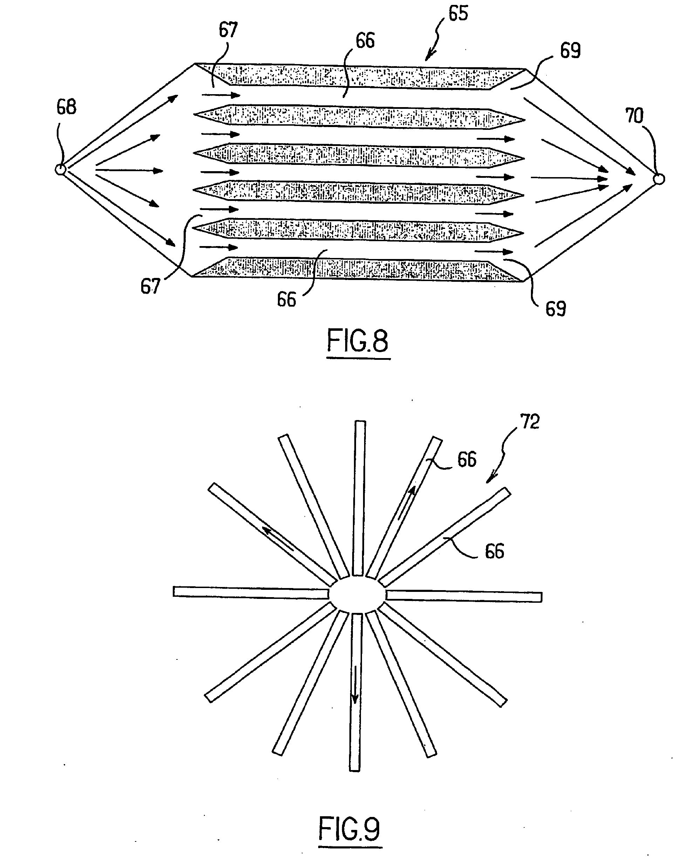

On a représenté sur la figure 8, en vue de dessus, suivant l'axe Z, un dispositif microfluidique 65 conforme à l'invention, comportant un réseau de microcanaux 66 disposés de manière parallèle.

Dans l'exemple considéré, le dispositif 65 comporte une pluralité d'orifices d'alimentation 68 à l'instar des orifices d'alimentation 21 et 25 précédemment décrits.

Les entrées 67 des microcanaux 66 présentent une forme convergente afin de diriger l'écoulement à l'intérieur du microcanal 66 considéré.

Les sorties 69 présentent une forme divergente et sont reliées à des orifices de sortie 70.

Le dispositif 65 permet de traiter un volume plus important de produit.

La récupération des espèces ayant migré peut se faire individuellement pour chaque microcanal 66 ou, en variante, à des sorties communes à plusieurs microcanaux 66.

On a représenté sur la figure 9 un dispositif microfluidique 72 comportant des microcanaux 66 disposés en étoile reliés par exemple à une entrée commune.

Chaque microcanal 66 peut comporter des sorties qui lui sont propres.

Bien entendu, l'invention n'est pas limitée aux exemples de mise en oeuvre qui viennent d'être décrits.

Le microcanal 2 peut comporter par exemple un nombre d'entrées supérieur à 3.

En variante, le microcanal 2 peut comporter par exemple une seule entrée et au moins trois sorties ou au moins trois entrées et une seule sortie.

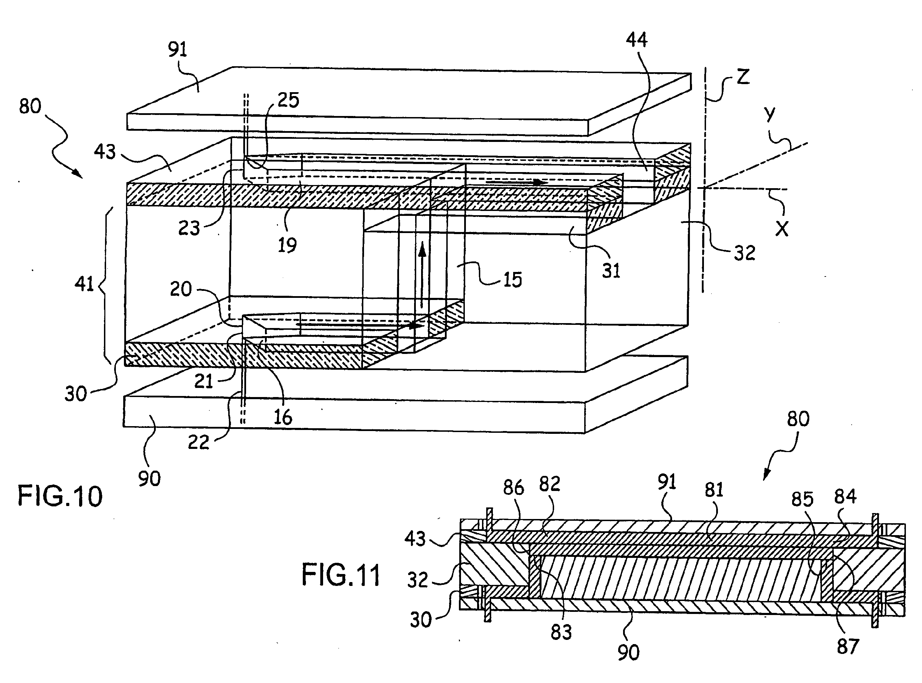

On a représenté sur la figure 11 un dispositif 80 de séparation fluidique conforme à un autre exemple de mise en oeuvre de l'invention.

Ce dispositif 80 comporte un microcanal 81 avec des première 82 et deuxième 83 entrées et des première 84 et deuxième 85 sorties.

Les entrées 82 et 83, respectivement les sorties 84 et 85, sont séparées par une paroi de séparation transversale 86, respectivement 87.

Comme illustré sur la figure 10, le dispositif 80 est formé d'un ensemble 41 tel que décrit ci-dessus, d'une feuille 43 et de deux plaques 90 et 91 venant s'appliquer sur la feuille 30 et la plaque 32, respectivement sur la feuille 43.

Les plaques 32, 90 et 91 sont sensiblement rigides, et les feuilles 30, 31 et 43 sont sensiblement flexibles.

Les plaques 32, 90 et 91 peuvent être réalisées notamment en matière plastique, par exemple en Plexiglas^{®} ou Altuglas^{®}, ou à base de silice ou de verre.

La plaque 32 peut être réalisée à l'aide de techniques microfluidiques habituelles, par exemple en utilisant du PDMS, S8 ou autre matériau polymérique ou encore des masques de silice, cette liste n'étant pas limitative.

Le conduit 15 peut être formé par trois pièces collées et configurées afin de former une fente définissant le conduit 15.

En variante, le conduit 15 peut être formé par une fente creusée dans une pièce en matière plastique.

Les sorties 84 et 85 sont formées de manière analogue aux entrées 82 et 83.

## Revendications

1. Dispositif de séparation fluidique (1 ; 65 ; 72), notamment un dispositif microfluidique, comportant :
- au moins un microcanal (2 ; 66) s'étendant suivant un axe longitudinal (X), le microcanal ayant une section transversale présentant une largeur mesurée suivant un premier axe transversal (Y) et une épaisseur mesurée suivant un deuxième axe transversal (Z) perpendiculaire au premier, la largeur étant supérieure à l'épaisseur, le microcanal comportant, suivant le deuxième axe transversal, des parois inférieure (3) et supérieure (4),
- au moins des première (7), deuxième (8) et troisième (9) entrées en communication fluidique avec le microcanal (2), la deuxième entrée (8) étant disposée, suivant le deuxième axe transversal (Z), entre les première (7) et troisième (9) entrées,
**caractérisé en ce qu'**il comporte au moins des première (10) et deuxième (11) parois de séparation transversales, séparant les première et deuxième entrées, respectivement les deuxième et troisième entrées, les première et deuxième parois de séparation (10 ; 11) étant agencées de manière à ce que la deuxième entrée (8) soit séparée de chacune desdites parois inférieure (3) et supérieure (4) par une distance non nulle mesurée suivant le deuxième axe transversal (Z), la deuxième entrée (8) étant comprise suivant le deuxième axe transversal (Z) entre lesdites parois inférieure (3) et supérieure (4), la deuxième entrée (8) étant notamment adjacente à l'une au moins des parois de séparation.

2. Dispositif selon la revendication précédente, **caractérisé par le fait que** le rapport largeur/épaisseur du microcanal est supérieur à 2, mieux 5, notamment 10.

3. Dispositif selon l'une des deux revendications précédentes, **caractérisé par le fait que** le microcanal (2 , 66) présente une section transversale sensiblement rectangulaire.

4. Dispositif selon l'une quelconque des revendications précédentes, **caractérisé par le fait que** l'une au moins desdites trois entrées (7 ; 8 ; 9) présente une largeur au moins égale à celle du microcanal.

5. Dispositif selon l'une quelconque des revendications précédentes, **caractérisé par le fait que** l'une au moins des trois entrées débouche sur l'une des parois inférieure et supérieure du microcanal et une autre des trois entrées sur l'autre des parois inférieure et supérieure du microcanal.

6. Dispositif selon la revendication précédente, **caractérisé par le fait que** les première et troisième entrées sont disposées en regard l'une de l'autre.

7. Dispositif selon l'une quelconque des revendications 1 à 5, **caractérisé par le fait que** lesdites au moins trois entrées débouchent toutes soit sur la paroi inférieure soit sur la paroi supérieure du microcanal.

8. Dispositif selon l'une quelconque des revendications précédentes à l'exception de la revendication 6, **caractérisé par le fait que** les première et troisième entrées sont décalées l'une par rapport à l'autre suivant l'axe longitudinal du microcanal.

9. Dispositif selon l'une quelconque des revendications précédentes, **caractérisé par le fait que** la deuxième entrée (8) débouche dans le microcanal (2) parallèlement à l'axe longitudinal (X) de celui-ci.

10. Dispositif selon l'une quelconque des revendications précédentes, **caractérisé par le fait que** la deuxième entrée (8) est adjacente à, ou en amont de l'une au moins des parois de séparation (10 ; 11).

11. Dispositif selon l'une quelconque des revendications précédentes, **caractérisé par le fait qu'**il comporte au moins un orifice d'alimentation (21 ; 25) associé à l'une desdites trois entrées, l'orifice d'alimentation étant en communication fluidique avec cette entrée via un conduit, le conduit comportant notamment une portion divergeant (16 ; 19) depuis un sommet du conduit, l'orifice d'alimentation débouchant dans le conduit de manière adjacente audit sommet, notamment perpendiculairement au conduit.

12. Dispositif selon l'une quelconque des revendications précédentes, **caractérisé par le fait qu'**il comporte au moins des première et deuxième sorties (50 ; 51) en communication fluidique avec le microcanal, et séparées l'une de l'autre par une paroi de séparation transversale (52) ayant une hauteur non nulle mesurée suivant le deuxième axe transversal (Z).

13. Dispositif selon la revendication précédente, **caractérisé par le fait que** les première et deuxième sorties (50 ; 51) sont décalées l'une par rapport à l'autre suivant l'axe longitudinal du microcanal.

14. Dispositif selon la revendication 12, **caractérisé par le fait que** les première et deuxième sorties (50 ; 51) sont disposées en regard l'une de l'autre.

15. Dispositif selon l'une quelconque des revendications 12 à 14, **caractérisé par** le lait qu'il comporte en outre une troisième sortie (53), la deuxième sortie étant disposée entre les première et troisième sorties suivant le deuxième axe transversal, les première et deuxième sorties, d'une part, et les deuxième et troisième sorties, d'autre part, étant respectivement séparées par des parois de séparation transversales (52 ; 53) ayant une hauteur non nulle mesurée suivant le deuxième axe transversal.

16. Dispositif selon l'une quelconque des revendications 12 à 15, **caractérisé par le fait qu'**il comporte au moins un orifice de sortie associé à l'une desdites sorties, ledit orifice étant en communication fluidique avec cette sortie via un conduit, le conduit comportant une portion convergeant vers un sommet, l'orifice de sortie débouchant dans le conduit de manière adjacente au sommet, notamment perpendiculairement au conduit.

17. Dispositif selon l'une quelconque des revendications précédentes, **caractérisé par le fait qu'**il est agencé pour générer au sein d'au moins une portion du microcanal au moins un champ de force transversal, notamment un champ gravitationnel, électrique, magnétique ou acoustique.

18. Dispositif selon l'une quelconque des revendications précédentes, **caractérisé par le fait qu'**il comporte au moins une feuille (43), notamment un empilement d'au moins deux feuilles, par exemple en matière plastique ou en métal formant au moins partiellement le microcanal, la feuille ou ledit empilement de feuilles est pris en sandwich entre au moins deux plaques (32), notamment en matière plastique.

19. Dispositif selon l'une quelconque des revendications précédentes, **caractérisé par le fait qu'**il comporte un réseau de microcanaux (66) en parallèle.

20. Procédé, notamment de tri et/ou de séparation d'espèces contenues dans un produit, **caractérisé par le fait qu'**il comporte les étapes suivantes :
- faire circuler, de préférence de manière continue, dans le microcanal *via* ladite deuxième entrée au sein d'un dispositif tel que défini dans l'une quelconque des revendications 1 à 19, un produit contenant des espèces,
- faire circuler, de préférence de manière continue, un ou plusieurs fluides porteurs dans le microcanal *via* lesdites première et troisième entrées de manière à ce que le produit contenant les espèces s'écoule, au moins sur une portion du microcanal, sous la forme d'une nappe éloignée des parois inférieure et supérieure du microcanal.

21. Procédé selon la revendication précédente, comportant l'étape suivante :
- disposer le microcanal dans au moins un champ de force transversal au moins lorsqu'un écoulement est établi dans le microcanal, le champ de force étant notamment l'un d'un champ gravitationnel, électrique, magnétique ou acoustique.

22. Procédé selon l'une des deux revendications précédentes, comportant l'étape suivante :
- faire migrer les espèces sous l'effet de forces de portance hydrodynamique ou sous l'effet de la diffusion hydrodynamique induite par cisaillement.

23. Procédé selon l'une quelconque des revendications 20 et 21, **caractérisé par le fait qu'**il est utilisé dans l'une au moins des applications suivantes : méthodes de tri d'espèces, notamment macromoléculaires, par exemple de particules rigides ou déformables, de cellules biologiques, notamment de cellules sanguines, par exemple des cellules cancéreuses dans un échantillon de sang, des bactéries, d'émulsions colloïdales ou non colloïdales, de protéines, de liposomes, d'émulsion, méthodes de diagnostic ou d'analyse, méthodes de purification, d'enrichissement ou d'appauvrissement d'espèces, méthodes de synthèse d'espèces, méthodes de modification des caractéristiques physiques ou chimiques d'espèces, méthodes de recherche de médicaments, méthodes de mélange, méthodes de mesure de coefficient de diffusion.

24. Dispositif de séparation fluidique (1 ; 65 ; 72 ; 80), notamment un dispositif microfluidique, comportant :
- au moins un microcanal (2 ; 66 ; 81) s'étendant suivant un axe longitudinal (X), le microcanal ayant une section transversale présentant une largeur mesurée suivant un premier axe transversal (Y) et une épaisseur mesurée suivant un deuxième axe transversal (Z) perpendiculaire au premier, la largeur étant supérieure à l'épaisseur, le microcanal comportant, suivant le deuxième axe transversal, des parois inférieure (3) et supérieure (4),
- des première (7 ; 82) et deuxième (8 ; 83) entrées en communication fluidique avec le microcanal (2),
**caractérisé en ce qu'**il comporte au moins une paroi de séparation transversale (86), séparant les première et deuxième entrées, cette paroi de séparation (10 ; 86) étant agencée de manière à ce que la deuxième entrée (8 ; 83) soit séparée de l'une desdites parois inférieure (3) et supérieure (4) par une distance non nulle mesurée suivant le deuxième axe transversal (Z), la deuxième entrée (8 ; 83) débouchant dans le microcanal suivant le deuxième axe transversal (Z) sur l'autre desdites parois inférieure (3) et supérieure (4), la deuxième entrée (8) étant notamment adjacente à la paroi de séparation,
le dispositif comportant au moins une feuille ayant une découpe formant au moins partiellement un canal d'écoulement, cette feuille étant prise en sandwich entre au moins deux plaques.

25. Procédé de fabrication d'un dispositif de séparation fluidique (1 ; 65 ; 72 ; 80), selon l'une des revendications 1 et 24 comportant l'étape de disposer une feuille ayant une découpe formant au moins partiellement le microcanal entre au moins deux plaques.

## Patentansprüche

1. Fluidtrennvorrichtung (1; 65; 72), insbesondere Mikrofluid-Vorrichtung, enthaltend:
- zumindest einen Mikrokanal (2; 66), der sich entlang einer Längsachse (X) erstreckt, wobei der Mikrokanal einen Querschnitt mit einer Breite gemessen entlang einer ersten Querachse (Y) und einer Dicke gemessen entlang einer senkrecht zur ersten verlaufenden zweiten Querachse (Z) hat, wobei die Breite größer ist als die Dicke, wobei der Mikrokanal entlang der zweiten Querachse eine untere Wand (3) und eine obere Wand (4) aufweist,
- zumindest einen ersten (7), einen zweiten (8) und einen dritten (9) Einlass in strömungstechnischer Verbindung mit dem Mikrokanal (2), wobei der zweite Einlass (8) entlang der zweiten Querachse (Z) zwischen dem ersten (7) und dem dritten (9) Einlass angeordnet ist,
**dadurch gekennzeichnet, dass** sie zumindest eine erste (10) und eine zweite (11) quer verlaufende Trennwand aufweist, welche den ersten und den zweiten Einlass bzw. den zweiten und den dritten Einlass trennen, wobei die erste und die zweite Trennwand (10; 11) so angeordnet sind, dass der zweite Einlass (8) von jeder Wand, der unteren (3) und der oberen (4), mit einem Abstand ungleich null gemessen entlang der zweiten Querachse (Z) getrennt ist, wobei der zweite Einlass (8) entlang der zweiten Querachse (Z) zwischen der unteren Wand (3) und der oberen Wand (4) liegt, wobei der zweite Einlass (8) insbesondere an zumindest eine der Trennwände angrenzt.

2. Vorrichtung nach dem vorangehenden Anspruch, **dadurch gekennzeichnet, dass** das Verhältnis Breite/Dicke des Mikrokanals über 2, besser 5, insbesondere 10, liegt.

3. Vorrichtung nach einem der beiden vorangehenden Ansprüche, **dadurch gekennzeichnet, dass** der Mikrokanal (2; 66) einen im Wesentlichen rechteckförmigen Querschnitt aufweist.

4. Vorrichtung nach einem der vorangehenden Ansprüche, **dadurch gekennzeichnet, dass** zumindest einer der drei Einlässe (7; 8; 9) eine Breite aufweist, die zumindest gleich der des Mikrokanals ist.

5. Vorrichtung nach einem der vorangehenden Ansprüche, **dadurch gekennzeichnet, dass** zumindest einer der drei Einlässe an einer der Wände des Mikrokanals, nämlich der unteren und der oberen, mündet, und dass ein weiterer der drei Einlässe an der anderen, unteren bzw. oberen Wand des Mikrokanals mündet.

6. Vorrichtung nach dem vorangehenden Anspruch, **dadurch gekennzeichnet, dass** der erste und der dritte Einlass einander gegenüberliegend angeordnet sind.

7. Vorrichtung nach einem der Ansprüche 1 bis 5, **dadurch gekennzeichnet, dass** die zumindest drei Einlässe alle entweder an der unteren Wand oder an der oberen Wand des Mikrokanals münden.

8. Vorrichtung nach einem der vorangehenden Ansprüche, mit Ausnahme von Anspruch 6, **dadurch gekennzeichnet, dass** der erste und der dritte Einlass entlang der Längsachse des Mikrokanals zueinander versetzt sind.

9. Vorrichtung nach einem der vorangehenden Ansprüche, **dadurch gekennzeichnet, dass** der zweite Einlass (8) in den Mikrokanal (2) parallel zur Längsachse (X) desselben mündet.

10. Vorrichtung nach einem der vorangehenden Ansprüche, **dadurch gekennzeichnet, dass** der zweite Einlass (8) an zumindest eine der Trennwände (10; 11) angrenzt oder dieser vorgelagert ist.

11. Vorrichtung nach einem der vorangehenden Ansprüche, **dadurch gekennzeichnet, dass** sie zumindest eine Versorgungsöffnung (21; 25) aufweist, die einem der drei Einlässe zugeordnet ist, wobei die Versorgungsöffnung in Strömungsverbindung mit diesem Einlass über eine Leitung steht, wobei die Leitung insbesondere einen von einer Spitze der Leitung divergierenden Abschnitt (16; 19) aufweist, wobei die Versorgungsöffnung so in die Leitung mündet, dass sie an die Spitze angrenzt, insbesondere senkrecht zur Leitung.

12. Vorrichtung nach einem der vorangehenden Ansprüche, **dadurch gekennzeichnet, dass** sie zumindest einen ersten und einen zweiten Auslass (50; 51) in Strömungsverbindung mit dem Mikrokanal aufweist, die über eine quer verlaufende Trennwand (52) mit einer Höhe ungleich null gemessen entlang der zweiten Querachse (Z) getrennt sind.

13. Vorrichtung nach dem vorangehenden Anspruch, **dadurch gekennzeichnet, dass** der erste und der zweite Auslass (50; 51) entlang der Längsachse des Mikrokanals zueinander versetzt sind.

14. Vorrichtung nach Anspruch 12, **dadurch gekennzeichnet, dass** der erste und der zweite Auslass (50; 51) einander gegenüberliegend angeordnet sind.

15. Vorrichtung nach einem der Ansprüche 12 bis 14, **dadurch gekennzeichnet, dass** sie ferner einen dritten Auslass (53) aufweist, wobei der zweite Auslass zwischen dem ersten und dem dritten Auslass entlang der zweiten Querachse angeordnet ist, wobei der erste und der zweite Auslass einerseits und der zweite und der dritte Auslass andererseits durch jeweilige quer verlaufende Trennwände (52; 53) mit einer Höhe ungleich null gemessen entlang der zweiten Querachse getrennt sind.

16. Vorrichtung nach einem der Ansprüche 12 bis 15, **dadurch gekennzeichnet, dass** sie zumindest eine Auslassöffnung aufweist, die einem der Auslässe zugeordnet ist, wobei die Öffnung in Strömungsverbindung mit diesem Auslass über eine Leitung steht, wobei die Leitung einen zu einer Spitze konvergierenden Abschnitt aufweist, wobei die Auslassöffnung so in die Leitung mündet, dass sie an die Spitze angrenzt, insbesondere senkrecht zur Leitung.

17. Vorrichtung nach einem der vorangehenden Ansprüche, **dadurch gekennzeichnet, dass** sie dazu vorgesehen ist, um innerhalb zumindest eines Abschnitts des Mikrokanals zumindest ein quer verlaufendes Kraftfeld, insbesondere ein Gravitationsfeld, ein elektrisches, magnetisches oder akustisches Feld, zu erzeugen.

18. Vorrichtung nach einem der vorangehenden Ansprüche, **dadurch gekennzeichnet, dass** sie zumindest eine Folie (43), insbesondere einen Stapel aus zumindest zwei Folien, beispielsweise aus Kunststoff oder aus Metall, aufweist, die den Mikrokanal zumindest teilweise bilden, wobei die Folie bzw. der Stapel aus Folien sandwichartig zwischen zumindest zwei Platten (32), insbesondere aus Kunststoff, aufgenommen ist.

19. Vorrichtung nach einem der vorangehenden Ansprüche, **dadurch gekennzeichnet, dass** sie ein Netz aus parallel verlaufenden Mikrokanälen (66) aufweist.

20. Verfahren insbesondere zum Sortieren und/oder Trennen von in einem Produkt enthaltenen Spezies, **dadurch gekennzeichnet, dass** es die nachfolgenden Schritte umfasst:
- Umwälzen eines Spezies enthaltenden Produkts vorzugsweise in kontinuierlicher Weise in dem Mikrokanal *via* den zweiten Einlass innerhalb einer Vorrichtung wie in einem der Ansprüche 1 bis 19 definiert,
- Umwälzen eines oder mehrerer Trägermedien vorzugsweise in kontinuierlicher Weise in dem Mikrokanal *via* den ersten und den dritten Einlass, so dass das die Spezies enthaltende Produkt zumindest über einen Abschnitt des Mikrokanals in Form einer Schicht strömt, die von der unteren und der oberen Wand des Mikrokanals entfernt liegt.

21. Verfahren nach dem vorangehenden Anspruch, wobei es den nachfolgenden Schritt umfasst:
- Anordnen des Mikrokanals in zumindest ein quer verlaufendes Kraftfeld zumindest dann, wenn eine Strömung in dem Mikrokanal erfolgt, wobei das Kraftfeld insbesondere ein Gravitationsfeld, ein elektrisches, magnetisches oder akustisches Kraftfeld ist.

22. Verfahren nach einem der beiden vorangehenden Ansprüche, wobei es den nachfolgenden Schritt umfasst:
- Fortbewegen der Spezies unter der Wirkung von hydrodynamischen Auftriebskräften und unter der Wirkung der hydrodynamischen Diffusion, die durch Scherwirkung eingeleitet wird.

23. Verfahren nach einem der Ansprüche 20 und 21, **dadurch gekennzeichnet, dass** es bei zumindest einer der nachfolgenden Anwendungen verwendet wird: Verfahren zum Sortieren von Spezies, insbesondere makromolekularen Spezies, beispielsweise von starren oder verformbaren Partikeln, biologischen Zellen, insbesondere Blutzellen, beispielsweise Krebszellen in einer Blutprobe, Bakterien, von kolloidalen oder nicht kolloidalen Emulsionen, Proteinen, Liposomen, von einer Emulsion, Verfahren zur Diagnose oder Analyse, Verfahren zur Reinigung, An- oder Abreicherung von Spezies, Verfahren zur Synthese von Spezies, Verfahren zur Veränderung der physikalischen oder chemischen Eigenschaften von Spezies, Verfahren zur Erforschung von Arzneimitteln, Mischverfahren, Verfahren zum Messen des Diffusionskoeffizienten.

24. Fluidtrennvorrichtung (1; 65; 72; 80), insbesondere Mikrofluid-Vorrichtung, enthaltend:
- zumindest einen Mikrokanal (2; 66; 81), der sich entlang einer Längsachse (X) erstreckt, wobei der Mikrokanal einen Querschnitt mit einer Breite gemessen entlang einer ersten Querachse (Y) und einer Dicke gemessen entlang einer senkrecht zur ersten verlaufenden zweiten Querachse (Z) hat, wobei die Breite größer ist als die Dicke, wobei der Mikrokanal entlang der zweiten Querachse eine untere Wand (3) und eine obere Wand (4) aufweist,
- einen ersten (7; 82) und einen zweiten (8; 83) Einlass in strömungstechnischer Verbindung mit dem Mikrokanal (2),
**dadurch gekennzeichnet, dass** sie zumindest eine quer verlaufende Trennwand (86) aufweist, welche den ersten und den zweiten Einlass trennt, wobei diese Trennwand (10; 86) so angeordnet ist, dass der zweite Einlass (8; 83) von einer der Wände, nämlich der unteren (3) und der oberen (4), mit einem Abstand ungleich null gemessen entlang der zweiten Querachse (Z) getrennt ist, wobei der zweite Einlass (8; 83) in den Mikrokanal entlang der zweiten Querachse (Z) an der anderen, unteren (3) bzw. oberen (4) Wand mündet, wobei der zweite Einlass (8) insbesondere an die Trennwand angrenzt,
wobei die Vorrichtung zumindest eine Folie mit einem Ausschnitt aufweist, der zumindest teilweise einen Strömungskanal bildet, wobei diese Folie sandwichartig zwischen zumindest zwei Platten aufgenommen ist.

25. Verfahren zum Herstellen einer Fluidtrennvorrichtung (1; 65; 72; 80) nach einem der Ansprüche 1 und 24, das den Schritt des Anordnens einer Folie mit einem Ausschnitt umfasst, der zumindest teilweise den Mikrokanal zwischen zumindest zwei Platten bildet.

## Claims

1. A fluidic separation device (1; 65; 72) in particular a microfluidic device, the device comprising:
· at least one microchannel (2; 66) extending along a longitudinal axis (X), the microchannel having a cross-section that presents a width measured along a first transverse axis (Y) and a thickness measured along a second transverse axis (Z) perpendicular to the first, the width being greater than the thickness, the microchannel including, along the second transverse axis, bottom and top walls (3,4);
· at least first, second, and third inlets (7, 8,9) in fluidic communication with the microchannel (2), the second inlet (8) being disposed on the second transverse axis (Z) between the first and third inlets (7,9); and
· **characterized in that** it comprises at least first and second transverse separation walls (10, 11) respectively separating the first and second inlets and the second and third inlets, the first and second separation walls (10; 11) being arranged in such a manner that the second inlet (8)is separated from each of said bottom and top walls (3,4) by a non-zero distance measured along the second transverse axis (Z), the second inlet (8) being comprised along the second transverse axis between said bottom and top walls (3, 4), the second inlet being, in particular, adjacent to at least one of the separation walls.

2. A device according to the preceding claim, **characterized by** the fact that the width/thickness ratio of the microchannel is greater than 2, better greater than 5, in particular greater than 10.

3. A device according to either one of the two preceding claims, **characterized by** the fact that the microchannel (2; 66) presents a cross-section that is substantially rectangular.

4. A device according to any preceding claim, **characterized by** the fact that at least one of said three inlets (7; 8; 9) presents a width that is not less than the width of the microchannel.

5. A device according to any preceding claim, **characterized by** the fact that at least one of the three inlets opens out in one of the bottom and top walls of the microchannel, and another one of the three inlets opens out in the other one of the bottom and top walls of the microchannel.

6. A device according to the preceding claim, **characterized by** the fact that the first and third inlets are placed facing each other.

7. A device according to any one of claims 1 to 5, **characterized by** the fact that said at least three inlets all open out either into the bottom wall or into the top wall of the microchannel.

8. A device according to any preceding claim with the exception of claim 6, **characterized by** the fact that the first and third inlets are offset relative to each other along the longitudinal axis of the microchannel.

9. A device according to any preceding claim, **characterized by** the fact that the second inlet (8) opens out into the microchannel (2) parallel to its longitudinal axis (X).

10. A device according to any preceding claim, **characterized by** the fact that the second inlet (8) is adjacent to or upstream from at least one of the separation walls (10; 11).

11. A device according to any preceding claim, **characterized by** the fact that it includes at least one feed orifice (21; 25) associated with one of said three inlets, the feed orifice being in fluidic communication with said inlet via a duct, the duct including in particular a diverging portion (16; 19) that diverges from a tip of the duct, the feed orifice opening out into the duct adjacent to said tip, and in particular perpendicularly to the duct.

12. A device according to any preceding claim, **characterized by** the fact that it includes at least first and second outlets (50; 51) in fluidic communication with the microchannel, and separated from each other by a transverse separation wall (52) of non-zero height measured along the second transverse axis (Z).

13. A device according to the preceding claim, **characterized by** the fact that the first and second outlets (50; 51) are offset from each other along the longitudinal axis of the microchannel.

14. A device according to claim 12, **characterized by** the fact that the first and second outlets (50; 51) are disposed facing each other.

15. A device according to any one of claims 12 to 14, **characterized by** the fact that it further comprises a third outlet (53), the second outlet being disposed between the first and third outlets along the second transverse axis, the first and second outlets and the second and third outlets being mutually separated by respective transverse separation walls (52; 53) of non-zero height measured along the second transverse axis.

16. A device according to any one of claims 12 to 15, **characterized by** the fact that it includes at least one outlet orifice associated with one of said outlets, said orifice being in fluidic communication with said outlets via a duct, the duct including a portion that converges towards a tip, the outlet orifice opening out into the duct adjacent to the tip, in particular perpendicularly to the duct.

17. A device according to any preceding claim, **characterized by** the fact that it is arranged to generate within at least a fraction of the microchannel at least one transverse force field, in particular a gravitational, electric, magnetic, or acoustic field.

18. A device according to any preceding claim, **characterized by** the fact that it includes at least one sheet (43), in particular a stack of at least two sheets, e.g. of plastics material or of metal forming the microchannel at least in part, the sheet or said stack of sheets being sandwiched between at least two plates (32), in particular plates of plastics material.

19. A device according to any preceding claim, **characterized by** the fact that it includes an array of parallel microchannels (66).

20. A method, in particular a method of sorting and/or separating species contained in a substance, the method being **characterized in that** it comprises the following steps:
causing a substance containing species to flow preferably in continuous manner along the microchannel via said second inlet through a device as defined in any one of claims 1 to 19; and
· causing one or more carrier fluids to flow, preferably in continuous manner, along the microchannel via said first and third inlets in such a manner that the substance containing the species flows, over at least a fraction of the microchannel, in the form of a sheet that is spaced apart from the bottom and top walls of the microchannel.

21. A method according to the preceding claim, including the following step:
placing the microchannel in at least one transverse force field, at least while a flow is established within the microchannel, the force field being in particular a gravitational, electric, magnetic or acoustic field.

22. A method according to either one of the two preceding claims, including the following step:
· causing the species to migrate under the effect of hydrodynamic buoyancy forces or under the effect of hydrodynamic diffusion induced by shear.

23. A method according to claim 20 and claim 21, **characterized by** the fact that it is used in at least one of the following applications: methods of sorting species, in particular macromolecues, e.g. rigid or deformable particles, biological cells, in particular blood cells, e.g. cancer cells in a blood sample, bacteria, colloidal or non-colloidal emulsions, proteins, liposomes, emulsions, diagnosis or analysis methods, purification methods, methods of enriching or depleting species, methods of synthesizing species, methods of modifying physical or chemical characteristics of species, methods of searching for medicaments, methods of mixing, methods of measuring diffusion coefficients.

24. A fluidic separation device (1; 65; 72; 80), in particular a microfluidic separation device, the device comprising:
· at least one microchannel (2; 66; 81) extending along a longitudinal axis (X), the microchannel having a cross-section presenting a width measured along a first transverse axis (Y) and a thickness measured along a second transverse axis (Z) perpendicular to the first, the width being greater than the thickness, the microchannel including along the second transverse axis, bottom and top walls (3, 4);
· first and second inlets (7; 82 and 8; 83) in fluidic communication with the microchannel (2); and
· **characterized in that** it comprises at least one transverse separation wall (86) separating the first and second inlets, said separation wall (10; 86) being arranged in such a manner that the second inlet (8; 83) is separated from one of said bottom and top walls (3 and 4) by a non-zero distance measured along the second transverse axis (Z), the second inlet communicating (8, 83) inside the microchannel along the second transverse axis (Z) toward the other of said bottom and top walls (3, 4), the second inlet (8) being in particular adjacent to the separation wall;
the device including at least one sheet having a cutout forming at least part of a flow channel, said sheet being sandwiched between at least two plates.

25. A method of fabricating a fluidic separation device (1; 65; 72; 80) according to claims 1 and 24 comprising the step of placing a sheet having a cutout forming at least part of the flow microchannel between at least two plates.
